# DEMANDE DE BREVET EUROPEEN

(11) **EP 0 731 001 A1**
(43) Date de publication de la demande: **11.09.1996**
(21) Numéro de dépôt: 96400467.5
(22) Date de dépôt: 05.03.1996
(51) Int. Cl.: B60R 16/02

(54) **Installation d'alimentation électrique pour caravane ou similaire**

(30) Priorité: 08.03.1995 FR 9502696
(71) Demandeur: TRIGANO S.A., F-75019 Paris (FR)
(72) Inventeur: Barbier, Michel E., F-07500 Granges Les Valences (FR)
(74) Mandataire: Dronne, Guy

(57) **Abrégé**

L'invention concerne une installation d'alimentation électrique d'un volume habitable d'un véhicule tel qu'une caravane. L'installation comprend un conducteur électrique fixe (14) monté sur au moins une partie de la paroi relié à des moyens d'alimentation (16) en énergie électrique dudit conducteur électrique ; au moins un premier connecteur (C) intelligent apte à être monté en un point quelconque dudit conducteur électrique fixe (14) et relié à un organe de commande électrique pour transmettre sur ledit conducteur électrique fixe (14) des informations en réponse à l'activation dudit organe de commande ; et au moins un deuxième connecteur (C') intelligent apte à être monté en un point quelconque dudit conducteur électrique fixe (14) et relié électriquement à un récepteur électrique pour détecter les informations transitant sur ledit conducteur électrique fixe et pour commander l'alimentation en énergie électrique dudit récepteur électrique.

## Description

La présente invention a pour objet une installation d'alimentation électrique pour caravane et similaire.

De façon plus précise, l'invention concerne une installation électrique montée à l'intérieur de véhicules dits de loisir, tels que des caravanes proprement dites ou des camping-cars, ou encore à l'intérieur de cellules d'habitat constituées par exemple par des habitations de dimensions réduites qui peuvent être posées en un endroit convenable.

Dans la suite de la description, à chaque fois que l'on emploiera le terme "caravane", il faudra comprendre qu'il s'agit en réalité d'une des installations définies précédemment.

On sait que les véhicules de loisir tels que caravanes et camping-cars ont connu un développement très important et que les aménagements intérieurs réalisés dans ces véhicules sont de plus en plus importants, de plus en plus onéreux et de plus en plus soignés quant à leur présentation. Outre, le mobilier installé à l'intérieur de ces volumes habitables, il se pose la question de l'alimentation électrique des différents appareils électriques mis en place dans ces volumes habitables. Comme on le comprend aisément, l'alimentation électrique concerne non seulement les différents appareils électriques tels que sources d'éclairage, réfrigérateur, four, système de chauffage, etc. mais également l'alimentation électrique des différents organes de signalisation lumineuse que doit présenter une caravane ou un camping-car.

On comprend également que les clients acheteurs potentiels de tels véhicules de loisir sont de plus en plus exigeants et souhaitent souvent un aménagement particulier de l'installation électrique. La modification notamment des emplacements des commutateurs de commande de cette installation électrique ou encore la modification des emplacements des sources lumineuses entraîne des modifications de l'implantation des conducteurs électriques destinés à relier ces différents organes électriques. Ces modifications entraînent à leur tour des travaux supplémentaires non négligeables pour conserver à l'ensemble une bonne présentation et d'autre part cela entraîne un allongement des délais de fabrication et donc de livraison en fonction des désirs des clients.

Un objet de la présente invention est de fournir une installation d'alimentation électrique d'un véhicule de loisir ou d'une cellule d'habitat qui permette des modifications des différents organes de l'installation électrique en fonction des desiderata des clients sans que cela entraîne des frais supplémentaires significatifs ou n'accroisse les délais de fabrication de manière importante.

Pour atteindre ce but, selon l'invention, l'installation d'alimentation électrique d'un volume habitable d'un véhicule de loisir ou d'une cellule d'habitat, ledit volume comprenant une paroi, se caractérise en ce qu'elle comprend :
un conducteur électrique fixe monté sur au moins une partie de ladite paroi, ledit conducteur étant apte à recevoir un connecteur électrique en tout point ;
des moyens d'alimentation en énergie électrique dudit conducteur électrique ;
au moins un premier connecteur apte à être monté en un point quelconque dudit conducteur électrique fixe, ledit connecteur comprenant des premières bornes de connexion sur ledit conducteur électrique fixe, des deuxièmes bornes de connexion aptes à être reliées à un organe de commande électrique, des moyens d'élaboration et de mémorisation d'une information et des moyens pour transmettre sur ledit conducteur électrique fixe lesdites informations en réponse à l'activation dudit organe de commande ; et
au moins un deuxième connecteur apte à être monté en un point quelconque dudit conducteur électrique fixe, ledit deuxième connecteur comprenant des premières bornes de connexion sur ledit conducteur électrique fixe, des deuxièmes bornes de connexion aptes à être reliées électriquement à un récepteur électrique, des moyens pour détecter les informations transitant sur ledit conducteur électrique fixe, des moyens pour commander l'alimentation en énergie électrique dudit récepteur électrique en réponse aux informations détectées.

On comprend que, selon l'invention, l'installation électrique est constituée essentiellement par un conducteur électrique fixe desservant potentiellement tous les points du volume habitable et relié à une source d'alimentation électrique. Sur ce conducteur électrique fixe (qui sera appelé ultérieurement BUS), on peut monter en tous points des connecteurs électriques de deux types différents. Le premier type de connecteur électrique permet de relier un organe de commande tel qu'un commutateur au BUS tandis que le deuxième type de connecteur permet de connecter un récepteur électrique tel qu'une source lumineuse, un réfrigérateur, etc. audit BUS. Les deux types de connecteurs sont dits connecteurs intelligents et permettent respectivement, pour le premier type de connecteurs, de transmettre sur le BUS des informations d'adressage du récepteur à activer et, en ce qui concerne le deuxième type de connecteurs, de détecter les informations circulant sur le BUS et de provoquer l'activation de la charge électrique qui lui est associée si l'information transitant lui est destinée.

On comprend qu'ainsi il est possible, à partir d'un BUS qui est fixé de manière uniforme dans tous les volumes habitables, de brancher en un point convenable les connecteurs et de relier les récepteurs électriques ou les organes de commande au BUS par l'intermédiaire de ces connecteurs. On comprend qu'ainsi, sans que cela entraîne des transformations importantes, il est possible d'implanter en des endroits très variés les organes de commande tels que les commutateurs et les récepteurs électriques tels que les sources lumineuses sans que cela entraîne la mise en place de câbles électriques de longueur importante.

De préférence, le conducteur électrique comprend trois éléments conducteurs, les premier et deuxième éléments conducteurs étant raccordés aux moyens d'alimentation en énergie électrique, le troisième conducteur servant à transmettre lesdites informations. Ce mode de mise en oeuvre est particulièrement intéressant dans le cas où l'alimentation électrique se fait en basse tension continue, les informations elles étant bien sûr constituées soit par des signaux numériques, soit par des signaux alternatifs dont la fréquence est représentative des informations.

Selon un autre mode de mise en oeuvre, notamment si l'alimentation électrique se fait en tension alternative, le conducteur électrique peut ne comporter que deux éléments conducteurs qui sont reliés aux moyens d'alimentation en énergie électrique, un desdits éléments conducteurs servant en outre à la transmission desdites informations.

D'autres caractéristiques et avantages de la présente invention apparaîtront mieux à la lecture de la description qui suit d'un mode de réalisation de l'invention donné à titre d'exemple non limitatif. La description se réfère aux figures annexées sur lesquelles :
- la figure 1a est une vue schématique simplifiée d'un volume habitable équipé de l'installation selon l'invention ;
- les figures 1b à 1d montrent en coupe verticale différents modes de réalisation des connecteurs permettant leur montage sur le BUS en n'importe quel point ;
- la figure 2 montre un exemple de réalisation d'un connecteur du premier type permettant de relier un organe de commande au BUS ;
- la figure 3 montre un connecteur du deuxième type permettant de relier une charge électrique au BUS d'alimentation électrique ;
- la figure 4 montre un connecteur d'un type particulier permettant de relier les circuits d'un véhicule automobile au BUS de l'installation électrique du volume habitable ; et
- la figure 5 montre un exemple particulier de réalisation de connecteur servant à alimenter les organes lumineux de signalisation du véhicule comportant le volume habitable.

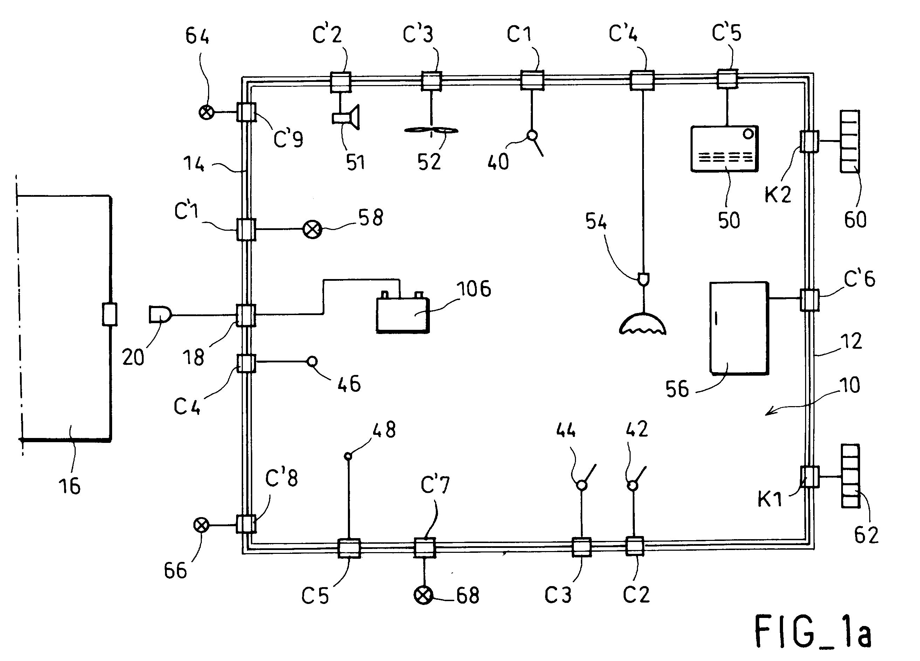

La figure 1a montre un schéma général de mise en place de l'installation électrique servant à alimenter un volume habitable tel qu'une caravane 10. On a représenté schématiquement les cloisons latérales 12 de ce volume habitable 10. Sur les cloisons 12, on a fixé un conducteur électrique ultérieurement appelé BUS, référencé 14, qui fait de préférence tout le tour des cloisons latérales 12 à une hauteur convenable. Dans le cas d'une caravane, le BUS 14 est alimenté électriquement par la batterie du véhicule de traction 16 par l'intermédiaire d'un connecteur 18 et d'une prise de connexion sur le véhicule 20.

Comme on l'a déjà indiqué, le principe de l'invention consiste dans le fait que, le BUS 14, que l'on décrira ultérieurement plus en détails, s'étendant sur toutes les cloisons latérales de la caravane, on peut venir monter différents connecteurs associés soit à des récepteurs électriques, soit à des organes de commande de ces récepteurs électriques.

Sur les figures 1b à 1d, on a représenté de façon simplifiée différents modes de montage électrique d'un connecteur portant la référence générique A sur le BUS qui, sur ces figures, porte la référence générale B. Comme on l'expliquera ultérieurement le BUS B du point de vue électrique est constitué de préférence par trois éléments conducteurs montés en parallèle respectivement référencés a, b et c. Les éléments conducteurs a et b sont reliés à la source d'alimentation électrique et servent donc à véhiculer l'énergie électrique. L'élément conducteur c sert à transmettre des informations sous forme de signaux électriques alternatifs ou numériques entre les différents connecteurs A montés sur le BUS B. Selon une autre caractéristique de l'invention, les connecteurs A peuvent être montés en n'importe quel point du BUS B. Pour cela différents modes de réalisation peuvent être utilisés.

Dans le cas de la figure 1b, le conducteur électrique B est constitué par un profilé en forme de U 22 dont un des côtés 24 est fixé sur les cloisons 12 du volume habitable. A l'intérieur de ce profilé sont montés en parallèle les différents conducteurs électriques a, b et c maintenus en place par tout moyen convenable. Le connecteur A relié au conducteur électrique 26 comporte trois bornes de connexion d, e et f destinées à assurer un contact électrique avec les conducteurs a, b et c. Dans le cas de la figure 1b, ces éléments de connexion d à f sont constitués par des paires de lames conductrices élastiques.

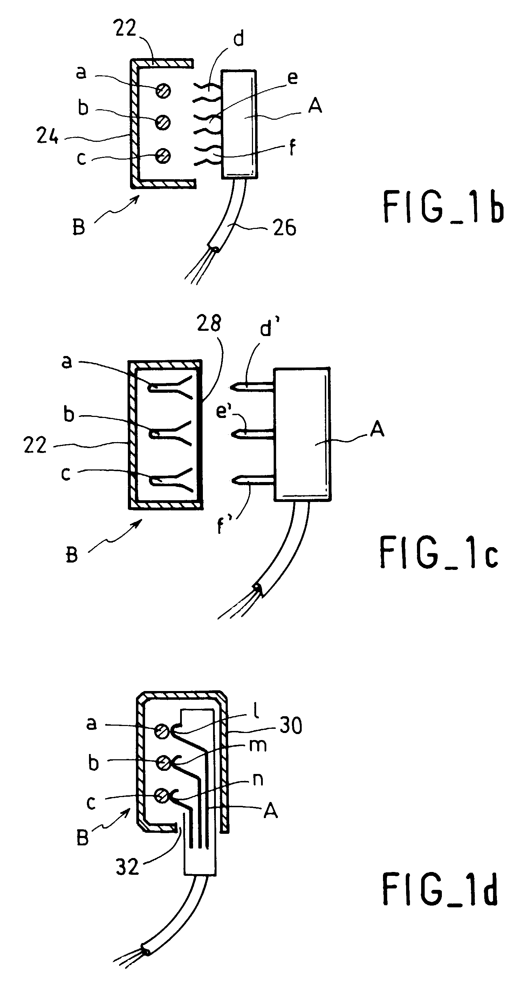

Dans le cas du mode de réalisation de la figure 1c, le BUS B comporte également un profilé 22 dont la face avant est obturée par une membrane perforable 28. Les conducteurs électriques a, b et c sont constitués par des lames élastiques. En revanche, le connecteur A comporte sur sa face de connexion trois bornes de connexion d', e' et f' capables de perforer la membrane perforable 28 et de venir établir un contact électrique entre les éléments conducteurs a, b, c et les bornes d', e, f'.

Dans le cas de la figure 1d, le BUS B est constitué par un profilé 30 qui entoure complètement les éléments conducteurs a, b et c, le profilé présentant dans sa partie inférieure une fente 32 dans laquelle peut être engagé le connecteur A. Les bornes du connecteur A sont constituées par des lames conductrices élastiques 1, m et n qui, lorsque le connecteur A est engagé à l'intérieur du profilé 30, viennent en contact électrique avec les éléments conducteurs a, b et c.

Comme on l'expliquera ultérieurement, dans certains cas le BUS ne comporte que deux éléments conducteurs. Il va de soi que dans ce cas le connecteur A ne comporte que deux bornes électriques de connexion.

Dans l'exemple d'installation représentée sur la figure 1a, il est prévu quatre commutateurs électriques de commande, respectivement référencés 40, 42, 44 et 46. Ces commutateurs de commande sont reliés au BUS 14 par l'intermédiaire de connecteurs d'un premier type, ces connecteurs étant référencés C1, C2, C3 et C4. Dans cette installation, on a également prévu une sonde thermométrique 48 servant à commander une installation de chauffage 50. La sonde 48 est également reliée au BUS 14 par un connecteur du premier type C5. Sur cette figure, on a représenté également différents récepteurs électriques tels qu'un spot 51, un ventilateur 52, un plafonnier 54, un appareil de chauffage 50, un réfrigérateur 56 et une source lumineuse 58. Ces différents récepteurs sont reliés au BUS 12 par des connecteurs du deuxième type, respectivement référencés C'1, C'2, C'3, C'4, C'5, C'6. On a en outre représenté les feux de signalisation du véhicule 60 et 62 pour les feux arrière et 64 et 66 pour les feux de position avant. On a enfin fait figuré une source lumineuse 68 d'éclairage d'un auvent externe. Les éclairages avant et la source lumineuse 68 sont raccordés par des connecteurs du deuxième type C'7, C'8 et C9. Enfin, les feux de signalisation arrière 60 et 62 sont raccordés par des connecteurs K1 et K2 d'un type particulier qui sera décrit ultérieurement.

Comme on l'a déjà indiqué précédemment, les organes de commande sont associés à des connecteurs intelligents du premier type Cᵢ qui sont programmés pour émettre sur le BUS une information d'adresse correspondant au récepteur électrique qu'ils servent à contrôler. Lors de l'activation du commutateur qui leur est associé, ils émettent sur le BUS l'information d'adresse préprogrammée. Les récepteurs électriques sont associés à des connecteurs intelligents du deuxième type C'ⱼ qui sont capables de repérer sur le BUS 14 les informations correspondant au récepteur auquel ils sont associés et de provoquer en réponse l'activation de ces récepteurs.

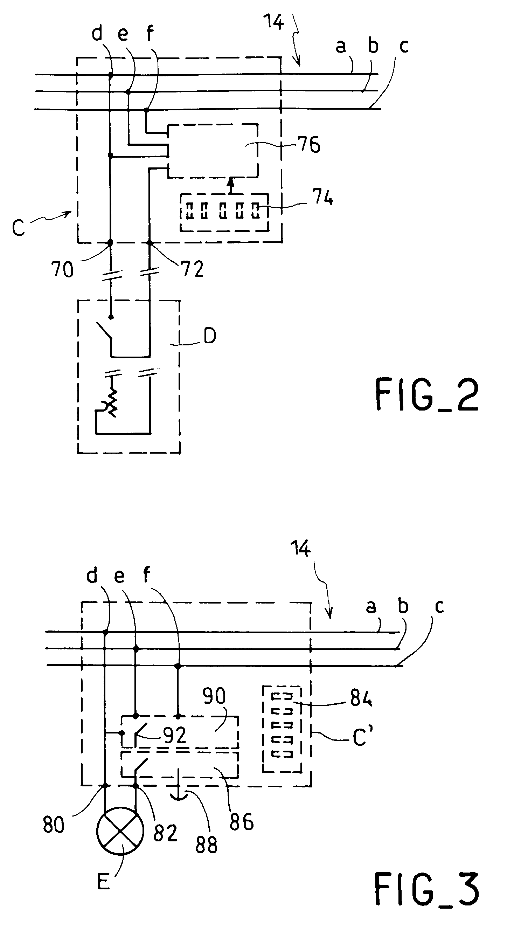

En se référant maintenant à la figure 2, on va décrire un mode préféré de réalisation des connecteurs du premier type C associés aux organes de commande, ces organes de commande D pouvant être soit de type logique tel qu'un commutateur, soit de type analogique tel que la sonde de commande du chauffage. Le connecteur C comprend essentiellement trois bornes déjà décrites d, e et f qui sont reliées électriquement aux conducteurs a, b et c du BUS 14. Dans l'exemple particulier décrit, l'élément conducteur a constitue la masse tandis que l'élément conducteur b reçoit la tension continue 12 volts. Enfin, l'élément conducteur c reçoit les informations. Le connecteur C comporte deux bornes de sortie 70 et 72 qui sont reliées à l'organe de commande D. Le connecteur comprend des circuits électriques ou électroniques constitués essentiellement par un organe de programmation et de mémorisation en information 74 qui permet d'entrer une adresse de récepteur électrique à commande ou de plusieurs de ces récepteurs. Le dispositif de codage 74 peut être constitué par des switchs ou des straps électriques ou encore il peut consister en une mémoire programmable qui est programmée initialement à l'aide d'un outil convenable tel qu'un micro-ordinateur. Le connecteur C comporte également un générateur de signaux de consigne 76 qui est relié au moyen de codage et de mémorisation 74. Le générateur 76 est construit de telle manière que, lorsque l'organe de commande D est activé, l'information contenue dans le circuit 74 est appliquée sur l'élément conducteur c du BUS 12. Cette information est donc pendant un certain temps disponible sur l'élément conducteur c du BUS 12 en tout point de celui-ci.

En se référant maintenant à la figure 3, on va décrire un connecteur C' du deuxième type associé à une charge électrique E. Le connecteur C' comporte trois bornes externes d, e et f pour le relier électriquement aux éléments conducteurs a, b et c du BUS 12.

Le connecteur C' comporte également deux bornes de sortie 80 et 82 qui permettent de le relier à la charge électrique E à l'aide d'un fil conducteur de type classique. Les circuits du connecteur C' sont constitués essentiellement par des moyens de programmation 84 qui sont de même nature que les moyens de programmation 74 de la figure 2. Ils permettent d'entrer une information spécifique au connecteur C' considéré et donc à la charge électrique E associée. Les circuits du connecteur C' peuvent comporter également un dispositif de protection électrique 86 tel qu'un disjoncteur associé bien sûr à une commande de réarmement 88. Les circuits du connecteur C' comportent enfin un dispositif 90 de commande logique ou analogique. Le circuit 90 est capable de lire en permanence les informations susceptibles de circuler sur l'élément conducteur c du BUS et de comparer cette information à celle qui est mémorisée dans le circuit 84. En cas d'identité entre ces deux informations, le circuit de commande 90 provoque la fermeture des interrupteurs internes tels que 92 assurant la liaison électrique entre la charge E et les éléments conducteurs a et b transmettant l'énergie électrique d'alimentation du récepteur. Il va de soi que plusieurs connecteurs C peuvent être associés à un même connecteur C' et que plusieurs connecteurs C' peuvent être commandés par un même connecteur C.

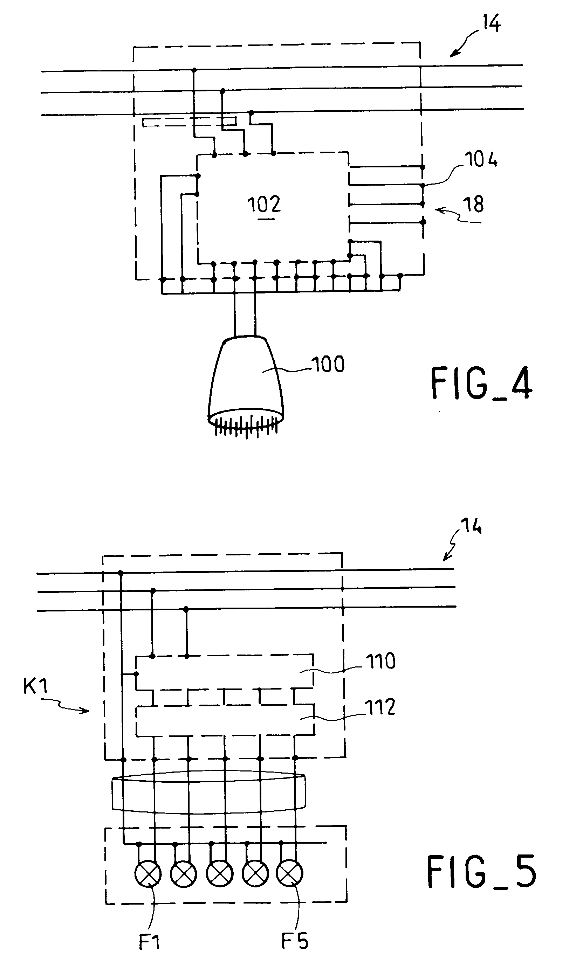

Sur la figure 4, on a représenté un mode préféré de réalisation du connecteur 18 qui permet, dans le cas où le volume habitable est celui d'une caravane tractée, de relier le véhicule de traction 16 au BUS 14. Le connecteur 18 est relié par une prise à 13 broches de type standard 100 aux circuits du véhicule et notamment à sa batterie et aux commandes des différents feux de signalisation de la caravane. Le connecteur 100 est relié aux éléments conducteurs du BUS 14 par les bornes a, b, c. Le connecteur 18 comprend essentiellement un module transducteur 102 qui permet de transformer les signaux de commande émis par le véhicule en informations codées transitant sur le BUS et détectables par les connecteurs C'ᵢ du deuxième type et, plus précisément, par les connecteurs K1, K2 et C'8, C'9 auxquels sont reliés les différents organes lumineux de signalisation de la caravane. Outre l'adresse du connecteur concerné, ces signaux peuvent concerner le mode de fonctionnement d'un feu en clignotant.

Le module 102 sert également à filtrer la tension délivrée par la batterie du véhicule. Il peut permettre en outre, grâce aux bornes supplémentaires 104, de brancher une autre alimentation électrique telle qu'une batterie supplémentaire 106.

La figure 5 montre un exemple de réalisation des connecteurs K1 et K2 associés aux feux arrière dans le cas où le volume habitable est celui d'une caravane. Le connecteur K1 ou K2 est relié d'une part au BUS 14 et d'autre part aux cinq feux de signalisation F1 à F5 correspondant respectivement aux feux rouges, au feu de stop, au feu clignotant, au feu de brouillard et au feu de recul. Le connecteur K1 ou K2 comprend un circuit de commande 110 qui reçoit l'information de commande venant, via le BUS, du véhicule et qui décode cette information pour commander l'alimentation d'un ou de plusieurs des feux F1 à F5. Le connecteur comporte en outre de préférence une protection électrique 112.

Les avantages de la présente invention découlent clairement de la description précédente.

Lors de la fabrication du volume habitable, seul le BUS 14 est mis initialement en place. Les différents organes de commande avec leurs connecteurs et les différents récepteurs électriques également avec leurs connecteurs peuvent être mis en place sur la paroi et connectés en fonction des desiderata du client sans que cela entraîne de travaux importants. En outre, l'ensemble de l'installation fonctionne par échange direct d'informations entre les connecteurs, ce qui évite la mise en place d'une unité centrale de gestion.

Enfin, il est possible de programmer les connecteurs, notamment les connecteurs K1 et K2 d'un générateur d'informations de telle manière que ces connecteurs émettent vers le véhicule via le BUS 14 un signal de défectuosité d'un des feux commandés par ces connecteurs.

On comprend que l'invention ne nécessite pas forcément l'emploi d'un système de multiplexage pour la transmission des informations sur le conducteur électrique fixe ou BUS.

## Revendications

1. Installation d'alimentation électrique d'un volume habitable d'un véhicule de loisir ou d'une cellule d'habitat, ledit volume comprenant une paroi (12), caractérisée en ce qu'elle comprend :
un conducteur électrique fixe (14) monté sur au moins une partie de ladite paroi, ledit conducteur étant apte à recevoir un connecteur électrique en tout point ;
des moyens d'alimentation (16) en énergie électrique dudit conducteur électrique ;
au moins un premier connecteur (C) apte à être monté en un point quelconque dudit conducteur électrique fixe (14), ledit connecteur comprenant des premières bornes de connexion (d, e, f) sur ledit conducteur électrique fixe, des deuxièmes bornes de connexion (70, 72) aptes à être reliées à un organe de commande électrique, des moyens d'élaboration et de mémorisation (74, 76) d'une information et des moyens pour transmettre sur ledit conducteur électrique fixe (14) lesdites informations en réponse à l'activation dudit organe de commande ; et
au moins un deuxième connecteur (C') apte à être monté en un point quelconque dudit conducteur électrique fixe (14), ledit deuxième connecteur comprenant des premières bornes (d, e, f) de connexion sur ledit conducteur électrique fixe, des deuxièmes bornes de connexion (80, 82) aptes à être reliées électriquement à un récepteur électrique, des moyens (90) pour détecter les informations transitant sur ledit conducteur électrique fixe, des moyens (90) pour commander l'alimentation en énergie électrique dudit récepteur électrique en réponse aux informations détectées.

2. Installation d'alimentation électrique selon la revendication 1, caractérisée en ce que ledit conducteur électrique comprend trois éléments conducteurs (a, b, c), des premier et deuxième éléments conducteurs (a, b) étant raccordés aux moyens d'alimentation en énergie électrique, le troisième (c) servant à transmettre lesdites informations.

3. Installation d'alimentation électrique selon la revendication 1, caractérisée en ce que ledit conducteur électrique comprend deux éléments conducteurs reliés aux moyens d'alimentation en énergie, un desdits éléments conducteurs servant en outre à la transmission desdites informations.

4. Installation d'alimentation électrique selon l'une quelconque des revendications 1 à 3, caractérisée en ce que les moyens d'élaboration d'une information comprennent des moyens de mémorisation (74) de données, un générateur d'informations (76) relié auxdits moyens de mémorisation et en ce que les moyens de transmission comprennent des moyens pour activer ledit générateur d'informations en réponse à l'actionnement dudit organe de commande.

5. Installation d'alimentation électrique selon la revendication 4, caractérisée en ce que les moyens de mémorisation (74) desdits premiers connecteurs comprennent des moyens pour mémoriser une information d'identification d'au moins un deuxième connecteur relié à un récepteur électrique qui doit être commandé par l'organe de commande associé audit premier connecteur.

6. Installation d'alimentation électrique selon la revendication 5, caractérisée en ce que chaque deuxième connecteur (C') comprend des moyens (84) pour mémoriser une information d'identification qui lui est propre et des moyens (90) pour comparer lesdites informations d'identification transitant sur ledit conducteur électrique fixe (14) avec ladite information d'identification mémorisée.

7. Installation d'alimentation électrique selon la revendication 2, caractérisée en ce que lesdits moyens d'alimentation en énergie électrique comprennent une source de tension continue.

8. Installation selon l'une quelconque des revendications 4 à 5 et 7, caractérisée en ce que lesdits générateurs d'informations sont des générateurs de signaux électriques alternatifs dont les fréquences sont représentatives desdites informations.

9. Installation d'alimentation électrique selon la revendication 1, caractérisée en ce qu'elle comprend:
une pluralité de premiers connecteurs (C), chacun étant destiné à être relié à un organe de commande électrique, l'actionnement d'au moins un organe de commande électrique étant manuel, et
une pluralité de deuxièmes connecteurs (C'), chacun étant destiné à être relié à un récepteur électrique qui doit être commandé par l'organe de commande associé audit premier connecteur (C),
en ce que les moyens d'élaboration et de mémorisation desdits premiers connecteurs (C) comprennent des moyens de mémorisation (74) d'une information d'identification d'au moins un deuxième connecteur (C') relié à un récepteur électrique et un générateur d'informations (76) relié auxdits moyens de mémorisation, d'une part et à au moins une des premières bornes de connexion (d, e, f), d'autre part,
en ce que les moyens de transmission desdits premiers connecteurs (C) comprennent des moyens pour activer ledit générateur d'informations (76) en réponse à l'actionnement de l'organe de commande associé audit premier connecteur (C),
et en ce que lesdits deuxièmes connecteurs (C') comprennent des moyens (84) pour mémoriser une information d'identification propre à chaque deuxième connecteur (C') et des moyens (90) pour comparer les informations issues du générateur d'informations (76) et transitant sur ledit conducteur électrique fixe (14) avec ladite information d'identification mémorisée.
